# EUROPEAN PATENT APPLICATION

(11) **EP 1 840 348 A1**
(43) Date of publication of application: **03.10.2007**
(21) Application number: 07100875.9
(22) Date of filing: 22.01.2007
(51) Int. Cl.: F01N 3/023, F01N 3/08, F01N 9/00

(54) **EGR System for Engine**

(30) Priority: 31.03.2006 JP 2006096627
(71) Applicant: Mazda Motor Corporation, Aki-gun, Hiroshima 730-8670 (JP)
(72) Inventor: Nishimura, Hiroyuki, Aki-gun 730-8670 Hiroshima (JP)
(74) Representative: Laufhütte, Dieter

(57) **Abstract**

An oxidation catalyst **(16)** and a filter **(17)** for trapping particles in exhaust gas are provided in a discharge passage **(3)** of an engine **(1),** and a passage **(21)** is provided for recirculating the exhaust gas to an intake passage **(2)** from a part of a discharge passage **(3)** which is located on the downstream side of the oxidation catalyst **(16).** During the time when unburned fuel is supplied to the oxidation catalyst **(16)** by post injection for filter regeneration, the exhaust gas is recirculated through the passage **(21)** on the downstream side of the oxidation catalyst **(16)** to prevent a large amount of unburned fuel from being mixed with the recirculated exhaust gas.

## Description

### Field of the Invention

The present invention relates to an EGR system for an engine.

### Background Art

In diesel engines, it has been known that exhaust gas recirculation (EGR) for recirculating part of exhaust gas of the engine to an intake passage is effective for reducing NOx (nitrogen oxides) output. In the case where a filter for trapping particles (particulate materials, especially carbon) in the exhaust gas is provided in a discharge passage, however, the exhaust gas recirculation may influence adversely on the engine and the like during filter regeneration for burning and removing the particles trapped at the filter.

The influence would occur in the case where the filter is regenerated in such a manner that an oxidation catalyst is provided at a part of the discharge passage which is located on the upstream side of the filter or at the filter and unburned fuel is supplied to the oxidation catalyst for generating heat of oxidation reaction of the unburned fuel to increase the temperature of the filter. When exhaust gas recirculation is executed in such filter regeneration, the unburned fuel for filter regeneration is sent to the cylinder of the engine through an exhaust gas recirculation passage together with the exhaust gas, which may cause abnormal fuel combustion in the engine. As well, the unburned fuel may adhere to the wall of the exhaust gas recirculation passage to clog it. For solving these problems, Japanese Patent Application Laid Open Publication No. 2005-282477A proposes that exhaust gas recirculation is stopped during the filter regeneration.

While, stopping of exhaust gas recirculation accompanies an increase in NOx output, and therefore, it is difficult to meet a demand for suppressing NOx output as far as possible even if a NOx reduction catalyst is arranged in the discharge passage.

### Summary of the Invention

The present invention has its object of enabling exhaust gas recirculation with no problems, such as the aforementioned abnormal combustion in an engine, adhesion of unburned fuel to an exhaust gas recirculation passage, and the like, invited even in filter regeneration.

The unburned fuel for filter regeneration is oxidized by an oxidation catalyst, and therefore, the amount of the unburned fuel in the exhaust gas having passed through the oxidation catalyst is less. To solve the aforementioned problems, the present invention takes the above fact into consideration and allows the exhaust gas having passed through the oxidation catalyst to be recirculated to the intake passage.

An EGR system for an engine in the present invention includes: a filter arranged in a discharge passage of an engine for trapping particles in exhaust gas; an oxidation catalyst provided at a part of the discharge passage which is located on the upstream side of the filter or at the filter; a first exhaust gas recirculation passage for recirculating the exhaust gas from a part of the discharge passage which is located on the downstream side of the oxidation catalyst to an intake passage of the engine; exhaust gas recirculation control means for controlling an amount of the exhaust gas recirculated through the exhaust gas recirculation passage to the intake passage; injection control means for controlling an injection amount and an injection timing of fuel injected to an in-cylinder combustion chamber in the engine; and filter regeneration means for burning particles trapped at the filter in such a manner that the injection control means is allowed to operate so as to execute post injection of fuel in the expansion stroke or the exhaust stroke after main injection, which is for injecting fuel around the top dead center of the compression stroke, to supply unburned fuel to the oxidation catalyst for raising the temperature of the filter by heat of oxidation reaction of the unburned fuel, wherein means for detecting a parameter value in relation to a degree of activation of the oxidation catalyst is provided, and when it is judged, in filter regeneration by the filter regeneration means, on the basis of the parameter value in relation to the degree of activation of the oxidation catalyst that the oxidation catalyst is in a predetermined active state, the exhaust gas recirculation control means allows the exhaust gas to be recirculated through the first exhaust gas recirculation passage to the intake passage.

With the above arrangement, the exhaust gas is recirculated from a part of the discharge passage which is located on the downstream side of the oxidation catalyst during filter regeneration. Accordingly, when the post injection for filter regeneration is executed for supplying unburned fuel to the oxidation catalyst, the unburned fuel is oxidized by the oxidation catalyst, so that the amount of unburned fuel in the exhaust gas flowing downstream of the oxidation catalyst becomes less. As a result, less or no amount of unburned fuel is mixed with the exhaust gas recirculated from the part on the downstream side of the oxidation catalyst. Hence, exhaust gas recirculation reduces NOx with no problems, such as abnormal combustion in the engine, adhesion of the unburned fuel to the exhaust gas recirculation passage, and the like invited even in filter regeneration.

Preferably, means for detecting a parameter value in relation to an amount of the particles trapped at the filter is further provided, and when it is judged based on the parameter value in relation to the amount of the trapped particles that the amount of the trapped particles is equal to or larger than a predetermined value and it is judged based on the parameter value in relation to the degree of activation thereof that the oxidation catalyst is in the predetermined active state, the filter regeneration means executes regeneration of the filter by the post injection.

With the above arrangement, the unburned fuel resulted by post injection is oxidized efficiently by the oxidation catalyst, which is advantageous in temperature increase and regeneration of the filter, preventing the filter from being clogged.

Optionally, there may be provided: a second exhaust gas recirculation passage for recirculating the exhaust gas from a part of the discharge passage which is located on the upstream side from the oxidation catalyst to the intake passage; and catalyst activation means for promoting activation of the oxidation catalyst in such a manner that when it is judged on the basis of the parameter value in relation to the amount of trapped particles that the amount of the trapped particles is equal to or larger than the predetermined value and it is judged on the basis of the parameter value in relation to the degree of activation thereof that the oxidation catalyst is not in the predetermined active state, the injection control means is operated so that second post injection of fuel is executed in the expansion stroke after the main injection and at a more advanced injection timing than that of the post injection for filter regeneration to increase the temperature of the exhaust gas discharged from the engine, wherein during operation of the catalyst activation means, the exhaust gas recirculation control means controls an amount of exhaust gas recirculated through the second exhaust gas recirculation passage to the intake passage.

The second post injection increases the temperature of the exhaust gas discharged from the engine, which means that almost all the fuel supplied to the in-cylinder combustion chamber by the second post injection is burned in the cylinder. Accordingly, the engine discharges exhaust gas containing less amount of unburned fuel during the second post injection. As a result, even if the exhaust gas is recirculated from a part on the upstream side of the oxidation catalyst through the second exhaust gas recirculation passage, less or no amount of unburned fuel is mixed with the recirculated exhaust gas. Hence, exhaust gas recirculation reduces NOx with no problems, such as abnormal combustion in the engine, adhesion of the unburned fuel to the exhaust gas recirculation passage, and the like invited.

Moreover, the exhaust gas at high temperature can be recirculated from a part on the upstream side of the oxidation catalyst to the intake passage, which increases the temperature of the engine and brings an advantage in supplying the exhaust gas at the high temperature to the oxidation catalyst, thereby contemplating prompt activation of the oxidation catalyst.

### Brief Description of the Drawings

FIG. **1** is a schematic view showing a construction of an EGR system for an engine according to one embodiment of the present invention.
FIG. **2** is a chart of a control flow in the embodiment.

### Description of the Preferred Embodiment

An embodiment of the present invention will be described below with reference to the accompanying drawings.

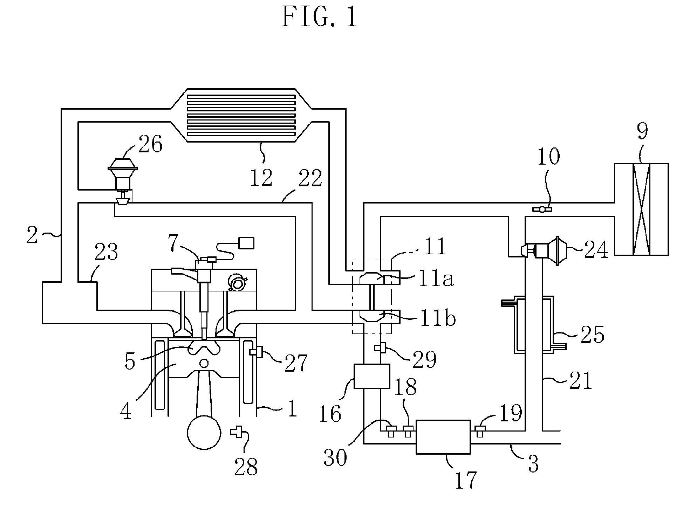

In FIG. **1,** reference numeral **1** denotes a multi-cylinder diesel engine (only one cylinder is shown in FIG. **1)** of an automobile, and **2** and **3** denote an intake passage and a discharge passage thereof, respectively. A deep dish-shaped in-cylinder combustion chamber **5** is formed at the top of a piston **4** of the engine **1.** A fuel injection valve **7** is provided at the cylinder head of the engine **1** so that fuel is injected and supplied directly to the in-cylinder combustion chamber **5** around the top dead center of the compression stroke.

In the intake passage **2,** there are arranged in this order from the upstream side to the downstream side an air cleaner **9,** an intake control valve **10,** a blower **11a** of a turbo supercharger **11,** an intercooler **12,** and a surge tank **23.** In the discharge passage **3,** there are arranged in this order from the upstream side to the downstream side a turbine **11b** of the turbo supercharger **11,** an oxidation catalyst **16,** and a filter **17** with an oxidation catalyst (a diesel particulate filter, DPF).

The oxidation catalyst **16** is provided for oxidizing HC (hydrocarbon), CO, and the like, in addition to unburned fuel in the exhaust air, and is so composed, for example, that a honeycomb carrier made of cordierite is allowed to carry a catalyst metal, such as Pt, Pd, or the like together with a catalyst metal support member, such as alumina or the like. The filter **17,** which is provided for trapping particles in the exhaust gas, is a wall-flow filter made of a heat-resistant ceramic material, such as silicon carbide (SiC), cordierite, or the like or a three-dimensional network filter made of a heat-resistant ceramic fiber. In the present embodiment, the filter **17** is so composed that the filter body is allowed to carry the catalyst metal, such as Pt, Pd, or the like together with the catalyst metal support member, such as alumina or the like.

Exhaust pressure sensors **18, 19** for detecting exhaust gas pressure are provided on the upstream side and the downstream side of the particulate filter **17,** respectively. The exhaust gas pressure sensors **18, 19** compose means for detecting a parameter value in relation to an amount of particles trapped at the filter **17.**

A part of the intake passage **2** which is located on the upstream side of the blower **11a** and a part of the discharge passage **3** which is located on the downstream side of the filter **17** are connected to each other through a first exhaust gas recirculation passage **21** for returning part of the exhaust gas to the intake passage **2.** As well, a part of the intake passage **2** which is located on the downstream side of the blower **11a** (and on the upstream side of the surge tank **23)** and a part of the discharge passage **3** which is located on the upstream side of the turbine **11b** are connected to each other through a second exhaust gas recirculation passage **22** for returning part of the exhaust gas to the intake passage **2.** In the middle of the first exhaust gas recirculation passage **21,** there are provided a first EGR valve **24** of vacuum actuator type and an EGR cooler **25** for cooling the exhaust gas by engine cooling water. As well, in the middle of the second exhaust gas recirculation passage **22,** there is provided a second EGR valve **26** of vacuum actuator type. In this embodiment, the first exhaust gas recirculation passage **21** and the first EGR valve **24** compose first recirculation means while the second exhaust gas recirculation passage **22** and the second EGR valve **26** compose second recirculation means.

Reference numeral **27** denotes a cooling water temperature sensor for detecting the temperature of the engine cooling water, **28** denotes an engine speed sensor, **29** denotes a first exhaust gas temperature sensor for detecting the temperature of the exhaust gas flowing into the oxidation catalyst **16,** and **30** denotes a second exhaust gas temperature sensor for detecting the temperature of the exhaust gas flowing into the filter **17.** The first exhaust gas temperature sensor **29** composes means for detecting a parameter value in relation to the degree of activation of the oxidation catalyst **16.**

A control unit (not shown) that incorporates a microcomputer controls the fuel injection valve **7,** the turbo supercharger **11,** and the EGR valves **24, 26.** For the control, the control unit receives various sensor signals from the exhaust gas pressure sensors **18, 19,** the cooling water temperature sensor **27,** the engine speed sensor **28,** the exhaust gas temperature sensors **29, 30,** a throttle position sensor (not shown), and the like. The control unit functions as fuel injection control means, filter regeneration means, catalyst activation means, and exhaust gas recirculation control means. Hereinafter, description will be given in detail.

The fuel injection control using the fuel injection valve **7** is classified into main injection control for allowing fuel to be injected around the top dead center of the compression stroke for generating engine output and post injection control for allowing fuel to be injected after the main injection. The post injection is classified into first post injection control (filter regeneration means) for filter regeneration and second post injection control (catalyst activation means) for activating the oxidation catalyst **16.**

In the main injection control, a target torque of the engine **1** is set on the basis of an engine speed N and a throttle opening angle θ. The target torque is so set to be large as the throttle opening angle θ or the engine speed N is increased. Further, an injected fuel amount in the main injection and a main injection timing are set. In detail, the injected fuel amount in the main injection is so set to be large as the target torque or the engine speed N is increased, and the main injection timing is set around the top dead center of the compression stroke of each cylinder, wherein it is taken into consideration that change in temperature of the engine cooling water or in engine speed N varies ignition delay time from fuel spray.

In the first post injection control for filter regeneration, a trapped particle amount M1 of the filter is calculated on the basis of a difference ΔP between the upstream exhaust gas pressure and the downstream exhaust gas pressure of the filter **17,** which are detected by the exhaust gas pressure sensors **18, 19,** respectively. As the trapped particle amount M1 becomes large, the exhaust gas flow through the filter **17** becomes worse, and therefore, the pressure difference ΔP is increased. Accordingly, the trapped particle amount M1 can be calculated from the pressure difference ΔP. It is judged that filter regeneration is necessary when the trapped particle amount M1 is equal to or larger than a predetermined value α. When so judged, the first post injection is executed for supplying unburned fuel to the oxidation catalyst **16** to increase the temperature of the exhaust gas flowing into the filter **17** by the heat of oxidation reaction of the unburned fuel generated at the oxidation catalyst **16,** thereby heating the filter **17** for regenerating the filter **17.**

It should be noted that because it is essential for filter regeneration to cause oxidation reaction of unburned fuel at the oxidation catalyst **16,** the first post injection is executed only when the oxidation catalyst **16** is activated, namely, is at high temperature.

In the present embodiment, whether or not the first post injection should be executed is judged on the basis of an exhaust gas temperature T2 detected by the exhaust gas temperature sensor **29** on the upstream side of the oxidation catalyst **16.** Specifically, when the exhaust gas temperature T2 is equal to or higher than a predetermine temperature, it is judged that the oxidation catalyst **16** is in a predetermined active state, and accordingly, the first post injection should be executed. When the vehicle velocity, the engine load, or the engine speed N is equal to or larger than a respective predetermined value, the temperature of the exhaust gas discharged from the engine **1** is high, which can be judged as the state in which the oxidation catalyst **16** is active. Hence, the first post injection is executed when any of them is equal to or larger than the respective predetermined value. In this case, a vehicle speed sensor, an engine load sensor, or the engine speed sensor **28** serves as parameter value detection means in relation to the degree of activation of the oxidation catalyst **16.**

The first post injection is executed in the expansion stroke or the exhaust stroke (for example, at a retarded injection timing than 30° CA (crank angle) ATDC (after top dead center) of the compression stroke) after the main injection executed around the top dead center of the compression stroke for obtaining a torque that the engine **1** requires, preferably, around 50° CA ATDC.

Filter regeneration (the first post injection) is terminated upon judgment that a trapped particle amount M (= M1+M2-M3) of the filter **17** becomes equal to or smaller than a predetermined value β. Even in filter regeneration, which bums and removes the particles trapped at the filter **17,** particles discharged from the engine **1** are deposited on the filter **17.** Taking this into consideration, the trapped particle amount M of the filter **17** is calculated from the trapped particle amount M1 upon judgment that filter regeneration is necessary, a particle amount M2 of particles discharged from the engine **1,** and a burned particle amount M3 of particles burned by filter regeneration, and whether or not filter regeneration should be terminated is determined by comparing the thus calculated trapped particle amount M with the predetermined value β. Wherein, the predetermined value β is smaller than the predetermined value α (β<α).

The particle amount M2 of the particle discharged from the engine **1** is calculated by referencing particle amount data preset so that the particle amount M2 increases as the throttle opening angle θ becomes small and increases as the engine speed N becomes high or low, namely, decreases when the engine speed N is in the middle. On the other hand, the burned particle amount M3 is calculated by referencing burned particle amount data preset so that the burned particle amount M3 increases as the exhaust gas temperature T1 of the exhaust gas flowing into the filter **17** becomes high.

The second post injection for activating the oxidation catalyst **16** is executed when it is judged that the filter regeneration is necessary (the trapped particle amount M1 is equal to or larger than the predetermined value α) and the exhaust gas temperature T2 is below a predetermined temperature (the oxidation catalyst **16** is not in the predetermined active state). The second post injection promotes activation of the oxidation catalyst **16** by increasing the temperature of the exhaust gas discharged from the engine **1** (the temperature of the exhaust gas flowing into the oxidation catalyst **16).** Accordingly, it is necessary to burn fuel for the second post injection in the in-cylinder combustion chamber. For taking this into consideration, the second post injection is executed in the expansion stroke after the main injection and at a more advanced injection timing than that of the first post injection, preferably, around 30° CA ATDC.

Referring to exhaust gas recirculation control, the exhaust gas recirculation is executed during the steady operation or the slow acceleration operation and is not executed during steep acceleration operation, and the exhaust gas recirculation control is executed by referencing exhaust gas recirculation amount data preset so that the exhaust gas recirculation amount becomes less as the throttle opening angle θ (or the target torque) is large and becomes more as the engine speed N is high. Further, in order to ensure the combustion stability of the engine **1,** the exhaust gas recirculation amount is set so as to be less as the temperature of the engine cooling water becomes low. Moreover, the exhaust gas recirculation amount is set so as to be less in filter regeneration than in filter non-regeneration under the same operation state of the engine **1** for promoting heating of the oxidation catalyst **16** and the filter **17.**

The most significant feature of the present invention lies in that the exhaust gas recirculation is executed even in filter regeneration (first post injection). To do so, the first exhaust gas recirculation passage **21** for recirculating the exhaust gas from the discharge passage **3** to the intake passage **2** is provided on the downstream side of the oxidation catalyst **16** (the downstream side of the filter **17** in the present embodiment).

Specifically, the first EGR valve **24** is controlled during filter regeneration (the first post injection) to allow exhaust gas recirculation through the first exhaust gas recirculation passage **21** while being controlled to allow no exhaust gas recirculation through the second exhaust gas recirculation passage **22** (the second EGR valve **26** is closed). On the other hand, during the catalyst activation promotion (the second post injection), the second EGR valve **26** is controlled to allow exhaust gas recirculation through the second exhaust gas recirculation passage **22** while being controlled to allow no exhaust gas recirculation through the first exhaust gas recirculation passage **21** (the first EGR valve **24** is closed).

During filter non-regeneration (during the time when neither the first nor second post injection is executed), the first and second EGR valves **24, 26** are controlled on the basis of the throttle opening angle θ (or the target torque), the engine speed N, and the temperature of the engine cooling water so that exhaust gas recirculation through the second exhaust gas recirculation passage **22** is executed during the cold operation of the engine **1** and exhaust gas recirculation through the first exhaust gas recirculation passage **21** is executed in the other normal operation thereof.

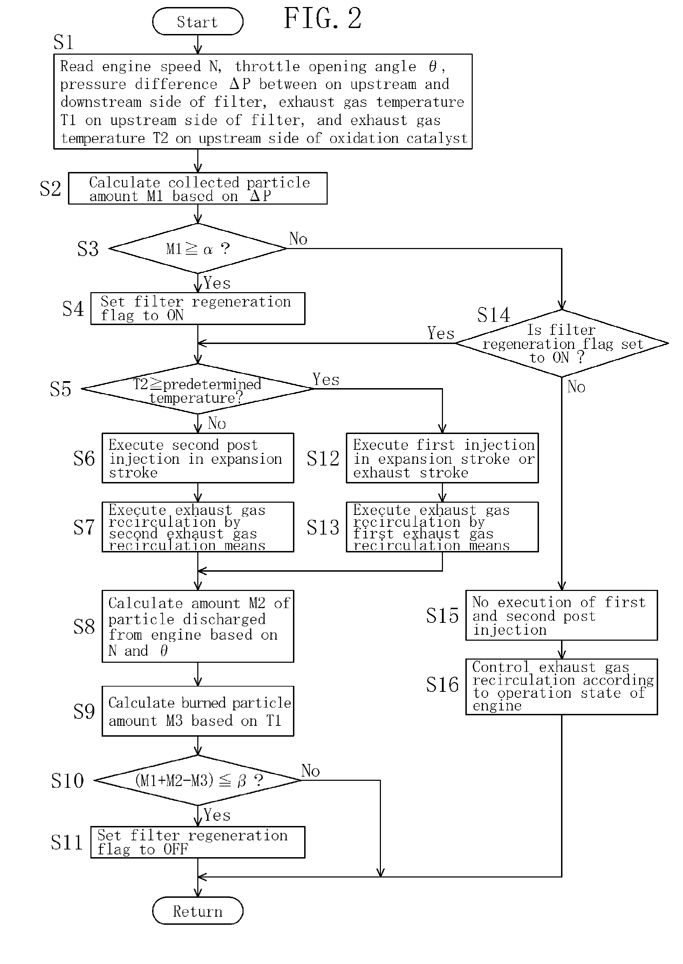

FIG. **2** depicts the control flow in the present embodiment. In a step S1 after start, there are read the engine speed N, the throttle opening angle θ, the pressure difference ΔP between on the upstream side and on the downstream side of the filter **17,** the exhaust gas temperature T1 on the upstream side of the filter **17,** and the exhaust gas temperature T2 on the upstream side of the oxidation catalyst **16.** The trapped particle amount M1 of the filter **17** is calculated on the basis of the pressure difference ΔP in a next step S2, and then, whether or not the thus calculated trapped particle amount M1 is equal to or larger than the predetermined value α (a threshold value for starting filter regeneration) is judged in a step S3.

When the trapped particle amount M1 is equal to or larger than the predetermined value α, the routine proceeds to a step S4 to set a filter regeneration flag to ON. Then in a next step S5, whether or not the exhaust gas temperature T2 on the upstream side of the oxidation catalyst **12** is equal to or higher than the predetermined temperature (the oxidation catalyst **16** is in the predetermined active state) is judged. When the exhaust gas temperature T2 is below the predetermined temperature, the routine proceeds to a step S6 to execute the second post injection for injecting fuel at an advance injection timing in the expansion stroke after the main injection. Then in a next step S7, exhaust gas recirculation by second exhaust gas recirculation means (the second exhaust gas recirculation passage **22** and the second EGR valve **26)** is executed, wherein the first EGR valve **24** is closed.

On the other hand, when the exhaust gas temperature T2 is equal to or higher than the predetermined temperature in the step S5, the routine proceeds to a step S12 to execute the first post injection for injecting fuel in the expansion stroke or the exhaust stroke (a more retarded injection timing than that of the second post injection) after the main injection. Then in a next step S13, exhaust gas recirculation by first exhaust gas recirculation means (the first exhaust gas recirculation passage **21** and the first EGR valve **24)** is executed, wherein the second EGR valve **26** is closed.

Then in a step S8, which is subsequent to the steps S7 or S13, the particle amount M2 of the particle discharged from the engine **1** is calculated on the basis of the engine speed N and the throttle opening angle θ. Further, the burned particle amount M3 is calculated on the basis of the exhaust gas temperature T1 on the upstream side of the filter **17** in a step S9. In a subsequent step S10, whether or not the particle amount M (M1+M2-M3) of the filter **17** is equal to or smaller than the predetermined value β is judged. When it is judged that the particle amount M is equal to or smaller than the predetermined value β, the routine proceeds to a step S 11 to set the filter regeneration flag to OFF, thereby terminating the regeneration of the filter **17.**

While, when it is judged that the trapped particle amount M1 calculated on the basis of the pressure difference ΔP is smaller than the predetermined value α in the step S3, the routine proceeds to a step S14 to judge whether or not the filter regeneration flag is set to ON. When the filter regeneration flag is set to ON, the routine proceeds to the step S5 to continue the regeneration of the filter **17.** Otherwise, namely, when the filter regeneration flag is not set to ON or when the filter **17** is not regenerated, the routine proceeds to a step S15 not to execute the first and second post injection. Then in a subsequent step S16, the exhaust gas recirculation control by the first EGR valve **24** or the second EGR valve **26** is executed according to the operation state of the engine **1.**

As described above, under the above control, the first post injection for filter regeneration is executed when the trapped particle amount M1 of the filter **17** is equal to or larger than the predetermined value α and the oxidation catalyst **16** is in the predetermined active state. This allows unburned fuel to be supplied to the oxidation catalyst **16,** thereby increasing the temperature of the filter **17** by the heat of oxidation reaction to burn and remove the trapped particles. The exhaust gas recirculation to the intake passage **2** in the first post injection is executed through the first exhaust gas recirculation passage **21** extending from a part of the discharge passage **3** which is located on the downstream side of the filter **17.**

The unburned fuel used for filter regeneration is oxidized by the oxidation catalyst **16** and further oxidized by the oxidation catalyst in the filter **17,** so that less or nor amount of unburned fuel resulted by the first post injection is mixed with the recirculated exhaust gas flowing through the first exhaust gas recirculation passage **21.** Accordingly, exhaust gas recirculation can be executed with no problem, such as abnormal combustion in the engine **1,** adhesion of the unburned fuel to the exhaust gas recirculation passages **21, 22,** and the like invited even in filter regeneration. Hence, the filter **17** can be regenerated without reducing NOx by the exhaust gas recirculation.

When the trapped particle amount M1 of the filter **17** is equal to or larger than the predetermined value α while the oxidation catalyst **16** is not in the predetermined active state, the second post injection is executed. The second post injection is executed in a comparatively earlier stage of the expansion stroke, which results in burning of almost all fuel injected in the cylinder, thereby increasing the temperature of the exhaust gas discharged from the engine **1.** This high temperature exhaust gas promotes prompt activation of the oxidation catalyst **16** to allow filter regeneration by the first post injection thereafter to start earlier.

The exhaust gas recirculation in the second post injection is executed through the second exhaust gas recirculation passage **22** extending from the upstream side of the oxidation catalyst **16,** wherein almost all part of fuel used for the second post injection is burned in the cylinder, as described above, thereby preventing a large amount of unburned fuel from being mixed with the recirculated exhaust gas. The exhaust gas recirculation from the upstream side of the oxidation catalyst **16** increases the temperature of the recirculated exhaust gas. This promotes burning of fuel used for the first post injection in the cylinder, presenting an advantage in prompt activation of the oxidation catalyst **16.**

Referring to exhaust gas recirculation during filter non-regeneration, it is executed through the second exhaust gas recirculation passage **22** extending from the upstream side of the oxidation catalyst **16** in the engine cooling to increase the temperature of the recirculated exhaust gas, presenting an advantage in temperature increase of the engine **1,** that is, in enhancement of the combustion stability, and in turn, in improvement on fuel efficiency. After the engine temperature has been increased, exhaust gas is recirculated through the first exhaust gas recirculation passage **21** connected to a part of the intake passage **2** which is locate on the upstream side of the blower **11a** of the turbo supercharger **11,** which presents an advantage in exhaust gas recirculation until the engine **1** is in high load operation. In detail, though the intake pressure on the downstream side of the blower **11a** increases by the operation of the turbo supercharger **11** as the engine load becomes high, exhaust gas is recirculated from the upstream side of the blower **11a** where the intake pressure is not increased, thereby allowing the exhaust gas to be recirculated adequately to the intake passage **2** to promote NOx reduction.

It is noted that in the case using the filter **17** with an oxidation catalyst as in the above embodiment, only the heat of oxidation reaction by the oxidation catalyst of the filter **17** may be utilized to increase the temperature of the filer **17,** without providing the independent oxidation catalyst **16**, for burning and removing the trapped particles.

Further, the pressure difference of the exhaust gas between on the upstream side and on the downstream side of the filter **17** is employed as a parameter value in relation to the amount of the particles trapped at the filter **17** in the present embodiment, but another value such as the travel distance of the automobile itself or the like may be employed as the parameter value.

## Claims

1. An EGR system for an engine which includes:
a filter **(17)** arranged in a discharge passage **(3)** of an engine **(1)** for trapping particles in exhaust gas;
an oxidation catalyst **(16)** provided at a part of the discharge passage **(3)** which is located on the upstream side of the filter **(17)** or at the filter **(17);**
a first exhaust gas recirculation passage **(21)** for recirculating the exhaust gas from a part of the discharge passage **(3)** which is located on the downstream side of the oxidation catalyst **(16)** to an intake passage **(2)** of the engine **(1);**
exhaust gas recirculation control means for controlling an amount of the exhaust gas recirculated through the exhaust gas recirculation passage **(21)** to the intake passage **(2);**
injection control means for controlling an injection amount and an injection timing of fuel injected to an in-cylinder combustion chamber **(5)** in the engine **(1);** and
filter regeneration means for burning particles trapped at the filter **(17)** in such a manner that the injection control means is allowed to operate so as to execute post injection of fuel in the expansion stroke or the exhaust stroke after main injection, which is for injecting fuel around the top dead center of the compression stroke, to supply unburned fuel to the oxidation catalyst **(16)** for raising the temperature of the filter **(17)** by heat of oxidation reaction of the unburned fuel, the EGR system **characterized in that**:
means for detecting a parameter value in relation to a degree of activation of the oxidation catalyst **(16)** is provided, and
when it is judged, in filter regeneration by the filter regeneration means, on the basis of the parameter value in relation to the degree of activation of the oxidation catalyst **(16)** that the oxidation catalyst **(16)** is in a predetermined active state, the exhaust gas recirculation control means allows the exhaust gas to be recirculated through the first exhaust gas recirculation passage **(21)** to the intake passage **(2).**

2. The EGR system of Claim 1, further comprising:
means for detecting a parameter value in relation to an amount of the particles trapped at the filter **(17),**
wherein when it is judged based on the parameter value in relation to the amount of the trapped particles that the amount of the trapped particles is equal to or larger than a predetermined value and it is judged based on the parameter value in relation to the degree of activation thereof that the oxidation catalyst **(16)** is in the predetermined active state, the filter regeneration means executes regeneration of the filter **(17)** by the post injection.

3. The ECR device of Claim 2, further comprising:
a second exhaust gas recirculation passage **(22)** for recirculating the exhaust gas from a part of the discharge passage **(3)** which is located on the upstream side from the oxidation catalyst **(16)** to the intake passage **(2);** and
catalyst activation means for promoting activation of the oxidation catalyst **(16)** in such a manner that when it is judged on the basis of the parameter value in relation to the amount of trapped particles that the amount of the trapped particles is equal to or larger than the predetermined value and it is judged on the basis of the parameter value in relation to the degree of activation thereof that the oxidation catalyst **(16)** is not in the predetermined active state, the injection control means is operated so that second post injection of fuel is executed in the expansion stroke after the main injection and at a more advanced injection timing than that of the post injection for filter regeneration to increase the temperature of the exhaust gas discharged from the engine **(1),**
wherein during operation of the catalyst activation means, the exhaust gas recirculation control means controls an amount of exhaust gas recirculated through the second exhaust gas recirculation passage **(22)** to the intake passage **(2).**
